Europäisches Patentamt

(19) European Patent Office

Office européen des brevets

(11) Publication number: **0 044 608**

**A1**

(12) # EUROPEAN PATENT APPLICATION

(21) Application number: **81302367.8**

(22) Date of filing: **29.05.81**

(51) Int. Cl.³: **B 29 C 17/12**
**B 29 D 17/00**

(30) Priority: **18.07.80 GB 8023568**

(43) Date of publication of application:
**27.01.82 Bulletin 82/4**

(84) Designated Contracting States:
**DE FR GB NL**

(71) Applicant: **EMI Limited**
**Blyth Road**
**Hayes Middlesex,UB3 1BP(GB)**

(72) Inventor: **Pullen, Geoffrey James**
**28, Stirling Road**
**Hayes Middlesex(GB)**

(72) Inventor: **Pemberton, John Andrew**
**20, The Alders Willow Bank**
**New Denham Buckinghamshire(GB)**

(72) Inventor: **Brown, Colin James**
**28, Brunner Road West Ealing**
**London W13(GB)**

(74) Representative: **Marsh, Robin Geoffrey**
**EMI Limited Blyth Road**
**Hayes Middlesex, UB3 1BP(GB)**

(54) **Improvements relating to flash trimming of disc records.**

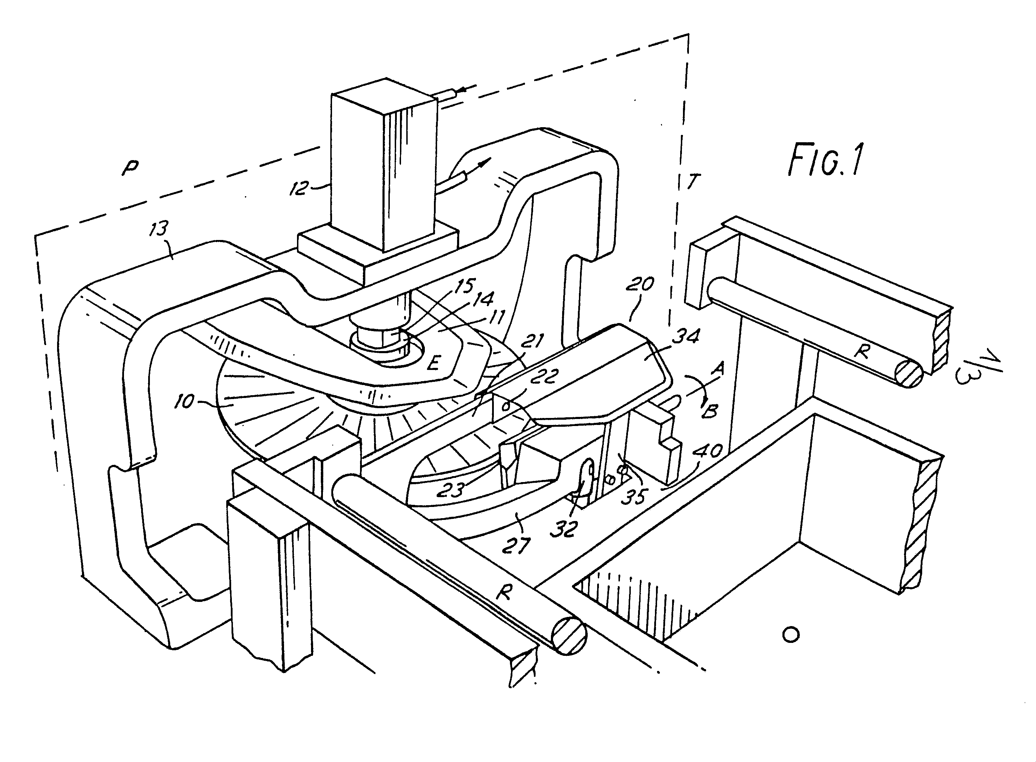

(57) An arrangement (Fig. 1) for trimming flash from a disc record. An untrimmed disc record is supported for rotation on a turntable (10) so that flash projects between a pair of separable cutting members (22, 23). The cutting members are mounted onto a support (21) so that their respective cutting edges ($22^1$, $23^1$) lie substantially in a common plane, tangential to the intended circumference of the disc record. The lower cutting member (23) is pivotally mounted at (28) and is acted upon by a piston (31) which causes it to move towards the other cutter member (22) which is fixedly mounted to the support (21). The cutting edges ($22^1$, $23^1$) cooperate to cut through the flash with a guillotine cutting action as the turntable rotates, or alternatively the blade (23) may be raised to cut through the flash prior to rotation. The blade (23) may have a relatively short cutting edge ($23^{11}$) inclined at an acute angle to the edge ($23^1$) which serves to produce a cleaner cut edge.

FIG.1

: 1 :

## IMPROVEMENTS RELATING TO FLASH TRIMMING OF DISC RECORDS

This invention relates to flash trimmers for pressed disc records.

In a record moulding operation a small excess of plastics material is used to ensure that each pressed record is formed completely. This results in the formation of flash at the periphery of the pressed record and this must be removed in a trimming operation.

Hitherto, various flash trimming devices have been employed. Rotary cutter wheels have been used, for example, and although this arrangement performs adequately the wheels tend to pinch the flash and can sometimes create a rough, uneven cut. Alternatively, in an attempt to overcome this problem a hot knife cutter has been used, but this proves to be wasteful of space as it requires a separate power supply.

It is, therefore, an object of the present invention to provide an improved flash trimming arrangement which substantially overcomes the above-described problems.

According to the invention there is provided an arrangement for trimming flash from a disc record comprising means for supporting a disc record for rotation, and a cutting device for trimming flash therefrom, characterised in that said device comprises a pair of separable, co-operative cutting members, further means for supporting said cutting members so that their respective cutting edges lie in a common plane substantially tangential to the intended circumference of a supported record when trimmed, and means for causing relative movement of the cutting members so that in a first extreme position thereof each said cutting edge lies respectively above and below the plane of a supported record, flash thereof projecting between the edges, and in the other extreme position of the cutting edges at least a part of each cutting edge lies on the same side of the plane of a supported record, and whereby rotation of the record when the cutting members assume or approach the other extreme position causes the cutting members to trim the record.

Preferably one of said cutting members is pivotally mounted to said further support means and the other cutting member is fixed thereto. The pivotally mounted cutting member may have two cutting edges inclined at an acute angle to one another.

The cutting members may be supported so that the pivotally mounted cutting member is capable of engaging the said intended circumference substantially at the intersection of said inclined edges.

The further support means for the cutting members may be pivotally mounted to permit rotation thereof away from the support means for a disc record.

The arrangement may include a shield for deflecting trimmed flash away from a supported record.

In order that the invention may be more readily understood and carried into effect an embodiment thereof will now be described, by way of example only, by reference to the accompanying drawings of which

Figure 1 shows a perspective view of a part of a record transfer press showing the trimming arrangement, and

Figures 2a and 2b respectively show side and end elevation views of the cutting device of the trimming arrangement of the present invention, and

Figure 3 shows a schematic plan view of a record useful for understanding the trimming action of the cutting device.

This invention comprises an apparatus, suitable for use in an automatic record press, for trimming flash from the periphery of a disc record.

Figure 1 of the drawings shows a perspective view of part of an automatic record press incorporating, at the flash trimming station T, one embodiment of the present invention. As is known in the art, records are moulded at a pressing station, shown schematically at P, and are then transferred by a reciprocating sled to the trimming station where the flash produced during moulding is removed. As a freshly pressed record is being transferred to the trimming station another record, which has just undergone the trimming operation, is simultaneously conveyed to the record bagging station B adjacent to the trimming station where the record is inserted into a sleeve and deposited at an output location O for collection. Guide rails R convey a record bagging device (not shown in Figure 1) to a position, adjacent to the trimming station, suitable for receiving a trimmed record. For reasons of clarity only those parts of the record press which relate to the flash trimming operation have been shown in detail in Figure 1 and it will be appreciated that the press also includes a shot forming apparatus located at a shot forming station on the side of P remote from T. As is common in a record tranfer press a common reciprocating sled is used to simultaneously transfer the product from each respective station (shot forming, pressing or trimming) to the next station in the press. The shaped end portion of the sled is shown at E in Figure 1 and, as will be described in greater detail below, this is used to transfer a trimmed record from the trimming station for insertion into a bag held open at the bagging station.

The flash trimming apparatus, shown at T in Figure 1, is comprised of two main components, namely a turntable 10 for supporting the record during the trimming operation and a cutting device 20. A freshly pressed record with flash attached is transferred from the press to a position overlying, and centred on the axis of, the turntable. The turntable may then be raised to support the transferred record and a clamp 11, actuated by a piston arrangement 12 which is supported on a frame 13, lowered to engage the supported record in the central label region. The end of the clamp which engages the record comprises a flat plate 14 which is freely mounted for rotation about the axis of the piston rod 15, thereby permitting rotation of the turntable whilst maintaining the record firmly against the surface thereof.

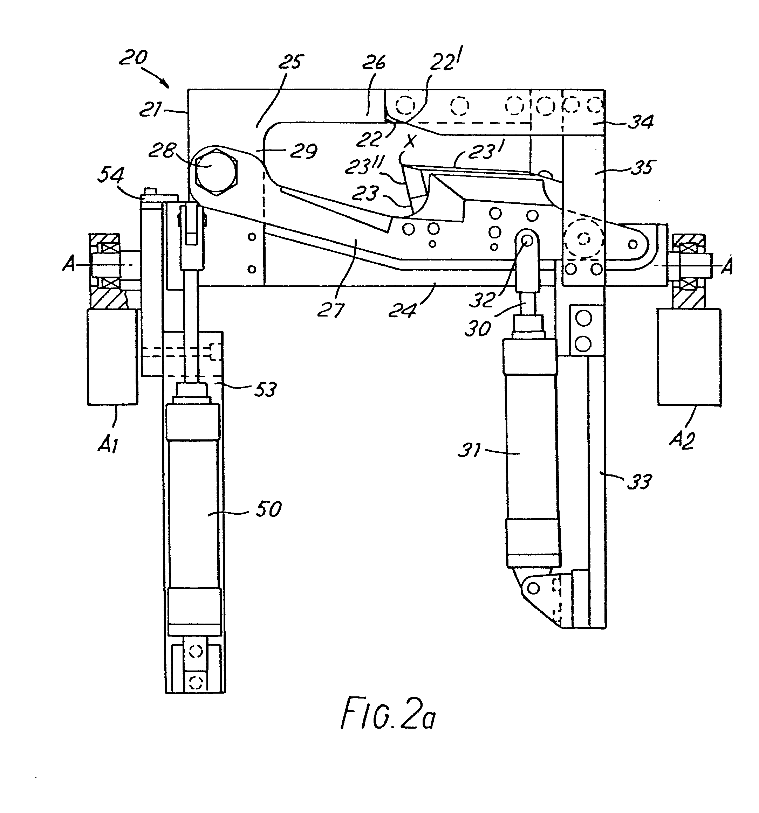

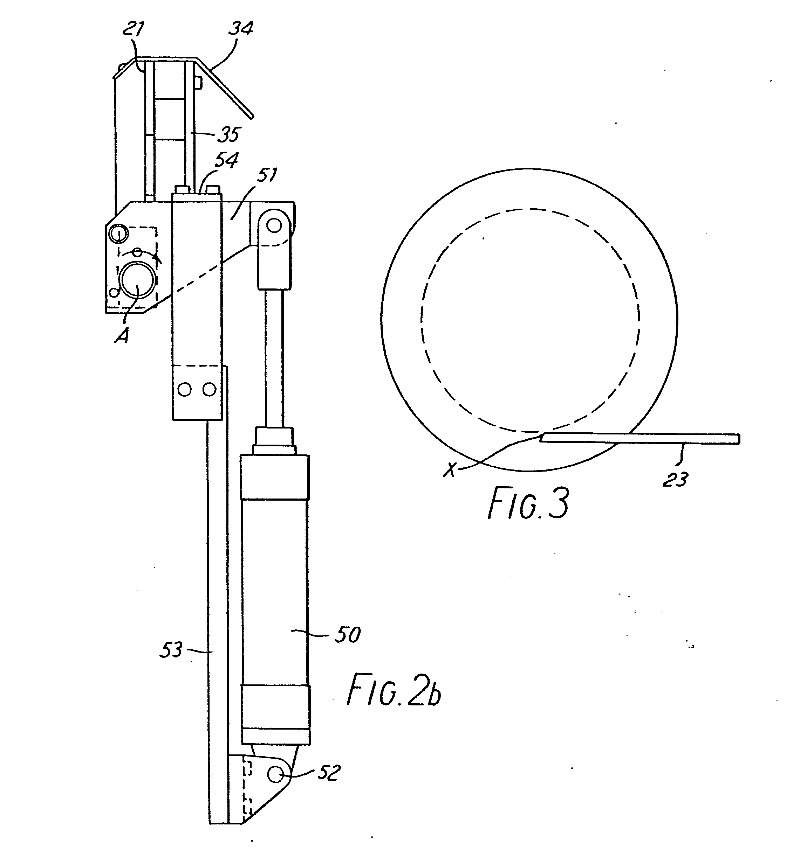

The cutting device 20 is mounted adjacent to the turntable and is shown in greater detail in the side and end elevation views of Figures 2a and 2b. In accordance with this embodiment of the invention the device 20 comprises a framework 21 for supporting two cutting blades 22 and 23. The framework 21 includes a base member 24 and an arched member 25 upstanding therefrom, the upper limb 26 of the arched member supporting the upper blade 22. This blade comprises a flat plate of hardened steel which has a cutting edge $22^1$ and is bolted along its length to the limb 26. Alternatively a cutting member made of soft steel and tipped with tungsten carbide could be used. The lower cutting blade 23 which is also made of hardened steel is firmly bolted to a support beam 27 which is pivotally mounted at 28 to the upright limb 29 of the arched member 25. In this example of the invention the lower cutting blade has two cutting edges, a straight upper edge $23^1$ and a second, relatively short edge $23^{11}$ inclined at an acute angle thereto and meeting the upper edge $23^1$ at a tip X. The two cutting edges $23^1$ and $23^{11}$ lie in a common plane defining the planar cutting face of the lower blade. A piston rod 30, actuated by a pneumatic piston 31 is coupled to the support beam at 32. The piston 31 is pivotally coupled to a framework 33 which is rigidly mounted to the base member 24. Extension of the piston rod 30, therefore, causes the lower blade 23 to be raised into engagement with the fixed upper blade 22.

As shown in Figure 1 the cutting device 20 is mounted adjacent to the turntable so that flash at the periphery of a clamped record projects between the opposed blades 22 and 23 and directly underlies the upper blade 22. The blades are set so that during each trimming operation their respective cutting edges $22^1$, $23^1$ lie in a plane substantially tangential to the intended circumference of a trimmed record, the cutting edge $23^1$ of the lower blade meeting the intended circumference at, or close to, the tip X. The opposed cutting faces of the two blades lie in parallel planes slightly offset from one another by an amount sufficient to permit the planar cutting face of the lower blade to slide past the opposed planar face of the upper blade, in a guillotine cutting action.

In a trimming operation the clamped record may be rotated and the piston 31 actuated to raise the lower blade into engagement with the flash. In this mode of operation the cutting edge $23^1$ initially engages the flash at a point remote from the tip X and co-operates with the upper blade to cut through the flash in a guillotine cutting action. As the blade continues to be raised the point of contact of the cutting edge $23^1$ with the flash approaches the tip X and the record is progressively trimmed to the intended circumference. Finally, when tip X engages the flash the intended circumference is reached and the relatively short cutting edge $23^{11}$, provided in this embodiment, completes the trimming to produce a neat, clean finish. The final position of the lower blade 23 is illustrated by reference to the schematic plan view of Figure 3. The final circumference of the record is represented by the dashed line, the blade 23 meeting this circumference at the tip X. Alternatively the piston 31 may be actuated to fully raise the blade 23 before the record is rotated. In an alternative embodiment of the invention a longer lower blade could be used which meets the intended circumference tangentially at an intermediate position, the short cutting edge $23^{11}$ being absent.

It has been found that by using two relatively moveable cutting blades in the above-described fashion a much neater cut is obtained than has hitherto been possible.

The cutting device of the above-described example also comprises a protective shield 34 which is fixedly mounted to the framework 21 and is shaped to deflect trimmed flash away from the record and towards a scrap collection chute shown generally at 40 in Figure 1. The shield is further supported by a post 35 which also serves as a guide for the pivoted support beam 27.

When the record has been trimmed the clamp 12 is released and the record is maintained by suction means against the underside of the shaped end E of the sled. The turntable 10 can then be lowered so that the sled may convey the record to the bagging station B. To permit this movement the trimming apparatus, in this example of the invention, is pivotally mounted about an axis AA at two support positions $A_1$ and $A_2$, fixedly mounted to the body of the press. The entire trimming device may then be rotated away from its upright trimming position shown in Figure 1 by actuation of another pneumatic piston 50 which is shown in Figure 2b, acts through a lever arm 51. The piston 50 is coupled at 52 to a supporting beam 53 which is also fixed to the body of the press. Retraction of the piston arm causes rotation of the trimming device 20 (through about 30°) away from the trimming position as indicated by the arrows in Figures 1 and 2b thereby permitting movement of the sled which then conveys the record to the bagging station B. Extension of the piston arm, however, returns the trimming device to its trimming position once the sled has returned to the trimming position and is prevented from moving past this position by a stop 54.

In an alternative embodiment of the invention the record may be removed by an alternative arrangement not requiring movement of the trimming device. In this case the rotation means may be omitted.

What we claim is:-

1. An arrangement for trimming flash from a disc record comprising means (10) for supporting a disc record for rotation, and a cutting device (20) for trimming flash therefrom, characterised in that said device comprises a pair of separable, co-operative cutting members, (22, 23) further means (21) for supporting said cutting members so that their respective cutting edges ($22^1$, $23^1$) lie in a common plane substantially tangential to the intended circumference of a supported record when trimmed, and means (31) for causing relative movement of the cutting members (22, 23) so that in a first extreme position thereof each said cutting edge ($22^1$, $23^1$) lies respectively above and below the plane of a supported record, flash thereof projecting between the edges, and in the other extreme position of the cutting members (22, 23) at least a part of each cutting edge ($22^1$, $23^1$) lies on the same side of the plane of a supported record, and whereby rotation of the record when the cutting members (22, 23) assume or approach the other extreme position causes the cutting members (22, 23) to trim the record.

2. An arrangement according to Claim 1 wherein one (23) of said cutting members is pivotally mounted to said further support means (21) and the other cutting member (22) is fixed thereto.

3. An arrangement according to Claim 2 wherein the pivotally mounted cutting member (23) has two cutting edges ($23^1$, $23^{11}$) inclined at an acute angle to one another.

4. An arrangement according to Claims 1 to 3 wherein the cutting members (22, 23) are supported so that the pivotally mounted cutting member (23) is capable of engaging the said intended circumference substantially at the intersection (X) of said inclined edges.

5. An arrangement according to Claim 2 wherein the pivotally mounted cutting member (23) has one cutting edge and has a length such that the cutting edge meets the intended circumference of a trimmed record tangentially at an intermediate position.

6.      An arrangement according to Claims 1 to 5 wherein the further support means (21) for the cutting members (22, 23) is pivotally mounted to permit rotation thereof away from the support means (10) for a disc record.

7.      An arrangement according to Claims 1 to 6 including a shield (34) for deflecting trimmed flash away from a supported record.

FIG.1

P

13

12

15
14
11

E

10

20

21

22

34

A

B

23

40

35

27

32

R

R

O

0044608

3/13

2/3

FIG.2a

FIG.2b

FIG.3

0044608

European Patent
Office

EUROPEAN SEARCH REPORT

Application number

EP 81 30 2367

| Category | Citation of document with indication, where appropriate, of relevant passages | Relevant to claim |
|---|---|---|
| | FR - A - 2 273 643 (METALMECCANICA PLAST) <br> * Whole document * <br><br> -- | 1,2 |
| | US - A - 2 586 663 (R. KELK) <br> * Whole document * <br><br> -- | 1,2 |
| A | US - A - 2 584 479 (J. McDONALD) | |
| A | GB - A - 1 261 145 (DGG) | |
| | ----- | |

**DOCUMENTS CONSIDERED TO BE RELEVANT**

**CLASSIFICATION OF THE APPLICATION (Int Cl )**

B 29 C 17/12
B 29 D 17/00

**TECHNICAL FIELDS SEARCHED (Int. Cl.³)**

B 29 C
B 29 D
B 23 D

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&. member of the same patent family, corresponding document

The present search report has been drawn up for all claims

| Place of search | Date of completion of the search | Examiner |
|---|---|---|
| The Hague | 27-10-1981 | DECLERCK |

EPO Form 1503.1  06.78